# EUROPÄISCHE PATENTSCHRIFT

(11) **EP 3 953 613 B1**
(45) Veröffentlichungstag und Bekanntmachung des Hinweises auf die Patenterteilung: **10.09.2025**
(21) Anmeldenummer: 20711791.2
(22) Anmeldetag: 11.03.2020
(51) Int. Cl.: F16H 55/06, F16H 57/00, B22F 5/08, F16H 1/12, F16H 1/14, F16H 55/17, B22F 7/08

(54) **GETRIEBE MIT EINEM DREHBAR GELAGERTEN VERZAHNUNGSTEIL UND VERFAHREN ZUM HERSTELLEN EINES GETRIEBES MIT EINEM VERZAHNUNGSTEIL**
GEAR UNIT COMPRISING A ROTATABLY MOUNTED TOOTHED PART, AND PROCESS FOR MANUFACTURING A GEAR UNIT COMPRISING A TOOTHED PART
TRANSMISSION DOTÉE D'UNE PARTIE DENTURE MONTÉE ROTATIVE ET PROCÉDÉ DE FABRICATION D'UNE TRANSMISSION DOTÉE D'UNE PARTIE DENTURE

(30) Priorität: 10.04.2019 DE 102019002628
(43) Veröffentlichungstag der Anmeldung: 16.02.2022
(73) Patentinhaber: SEW-EURODRIVE GmbH & Co. KG, 76646 Bruchsal (DE)
(72) Erfinder: BÜHN, Oliver, 76703 Kraichtal (DE); TEGELTIJA, Miki, 76689 Karlsdorf-Neuthardt (DE); HERBERGER, Michael Josef, 68789 St. Leon-Rot (DE)
(86) Internationale Anmeldenummer: PCT/EP2020/025121
(87) Internationale Veröffentlichungsnummer: WO 2020/207622

(56) Entgegenhaltungen:
- WO-A1-2015/022042
- CN-A- 107 725 618
- DE-A1- 102004 032 552
- US-A- 856 405
- US-B2- 9 812 923

## Beschreibung

Die Erfindung betrifft ein Getriebe mit einem drehbar gelagerten Verzahnungsteil und ein Verfahren zum Herstellen eines Getriebes mit einem Verzahnungsteil.

Es ist allgemein bekannt, dass ein Getriebe Verzahnungsteile aufweist, welche jeweils drehfest mit einer Welle verbunden sind.

Aus der US 2013 / 068 057 A1 ist ein Getriebe für einen Generator bekannt.

Aus der DE 1 892 456 U ist ein gezahnter Rohling aus gepresstem Sinterwerkstoff bekannt.

Aus der DE 40 21 024 A1 ist eine Antriebsübertragung für Nebenaggregate bekannt.

Aus der JP 2006-281 264 A ist ein Herstellverfahren für ein Getriebe bekannt.

Aus der DE 10 2004 032 552 A1 ist ein Verfahren zur Herstellung eines Zahnrads mit Außenverzahnung für Ölpumpen bekannt.

Aus der CN 107 725 618 A ist ein Verzahnungsteil bekannt.

Aus der US 865 405 A ist eine Spiralverzahnung bekannt.

Aus der US 9 812 923 B2 ist als nächstliegender Stand der Technik ein Getriebemotor bekannt, **der ein Hypoid-Rad und ein damit kämmendes Ritzel aufweist, welches von einem Motor angetrieben wird.** Es definiert ein Getriebe mit einem drehbar gelagerten Verzahnungsteil,wobei das Verzahnungsteil zwei Lageraufnahmen und eine Verzahnung aufweist, wobei das Verzahnungsteil einstückig ausgeführt ist, wobei die Verzahnung als eine Planverzahnung an einer axialen Stirnseite eines radial hervorragenden Bereichs des Verzahnungsteils ausgebildet ist, wobei das Verzahnungsteil als Vollwelle ausgebildet ist, wobei jeder Zahn der Planverzahnung bogenförmig verläuft, also bei zunehmendem Radialabstand einen zunehmenden Umfangswinkel aufweist, wobei der vom Material des Verzahnungsteils überdeckte Radialabstandsbereich den gesamten Radialabstandsbereich überdeckt, welcher zwischen der Drehachse des Verzahnungsteils und dem kleinsten Radialabstand der ersten oder zweiten Lageraufnahme sich erstreckt, wobei die Radialabstände auf die Drehachse des Verzahnungsteils bezogen sind.

Aus der WO 2015/022042 A1 ist ein Getriebe mit einem Ritzel und einem Rad bekannt.

**Dabei weist das Rad auf einer seiner Stirnseiten zwei voneinander beabstandete**

**Verzahnungsbereiche auf, wobei die Verzahnung zusammenhängend ist. Die Ritzelachse ist hierbei senkrecht und beabstandet von der Radachse.**

Der Erfindung liegt daher die Aufgabe zugrunde, ein Getriebe weiterzubilden, wobei ein Getriebe kompakt aufbaubar ist, insbesondere also ein hohes Drehmoment in einem kleinen Raumvolumen übertragbar ist.

Erfindungsgemäß wird die Aufgabe bei dem Getriebe nach den in Anspruch 1 und bei dem Verfahren nach den in Anspruch 12 angegebenen Merkmalen gelöst.

Wichtige Merkmale der Erfindung bei dem Getriebe sind, dass das Getriebe mit einem drehbar gelagerten Verzahnungsteil vorgesehen ist, wobei das Verzahnungsteil zwei Lageraufnahmen und eine Verzahnung aufweist, wobei das Verzahnungsteil samt Verzahnung aus gesintertem Metallpulver hergestellt ist, wobei das Verzahnungsteil einstückig ausgeführt ist. Von Vorteil ist dabei, dass das Verzahnungsteil einfach und kostengünstig samt Welle herstellbar ist. Somit weist das Verzahnungsteil selbst schon Lageraufnahmen auf. Da das Verzahnungsteil aus Metall gefertigt ist, ist die Tragfähigkeit sehr hoch. Eine Bearbeitung der Verzahnung ist nicht notwendig, da sie beim Sintern formgebend erzeugt ist.

Erfindungsgemäß ist die Verzahnung axial zwischen den beiden Lageraufnahmen angeordnet. Von Vorteil ist dabei, dass das Verzahnungsteil beidseitig gelagert ist.

Bei einer vorteilhaften Ausgestaltung weist die Verzahnung an ihrem in radialer Richtung äußeren Rand eine erste Fasenfläche auf,
insbesondere wobei die erste Fasenfläche an jeder Umfangsposition, insbesondere an jeder Umfangswinkelposition, zur axialen Richtung betragsmäßig einen Winkelbetrag aufweist,
welcher zwischen 10° und 30° beträgt, insbesondere zwischen 15° und 25°. Von Vorteil ist dabei, dass die Verzahnung am radial inneren und am radial äußeren Rand abgeschrägt ist. Insbesondere bei 15° bis 25° ist eine besonders gute Qualität erreichbar.

Bei einer vorteilhaften Ausgestaltung weist die Verzahnung an ihrem in radialer Richtung inneren Rand eine zweite Fasenfläche auf,
insbesondere wobei die zweite Fasenfläche an jeder Umfangsposition, insbesondere an jeder Umfangswinkelposition, zur axialen Richtung betragsmäßig einen Winkelbetrag aufweist, welcher zwischen 10° und 30° beträgt, insbesondere zwischen 15° und 25°. Von Vorteil ist dabei, dass die Verzahnung am radial inneren und am radial äußeren Rand abgeschrägt ist.

Insbesondere bei 15° bis 25° ist eine besonders gute Qualität erreichbar.

Bei einer vorteilhaften Ausgestaltung enthält eine erste Konusmantelfläche die erste Fasenfläche,
wobei eine zweite Konusmantelfläche die zweite Fasenfläche enthält,
wobei das Schnittgebilde der ersten Fasenfläche mit der zweiten Fasenfläche auf der der Planverzahnung zugewandten Seite des Verzahnungsteils angeordnet ist und/oder wobei das Schnittgebilde der ersten Fasenfläche mit der zweiten Fasenfläche näher am jeweiligen Kopf der Zähne der Verzahnung als am jeweiligen Fuß der Zähne der Verzahnung angeordnet ist,
insbesondere wobei die Konusspitze des Konus der ersten Konusmantelfläche auf der Mittelachse, Drehsymmetrieachse und/oder Drehachse des Verzahnungsteils angeordnet ist,
insbesondere wobei die Konusspitze des Konus der zweiten Konusmantelfläche auf der Mittelachse, Drehsymmetrieachse und/oder Drehachse des Verzahnungsteils angeordnet ist,
insbesondere wobei, dass Schnittgebildet ein Kreis ist, dessen Mittelpunkt auf der Mittelachse, Drehsymmetrieachse und/oder Drehachse des Verzahnungsteils angeordnet ist.

Von Vorteil ist dabei, dass die Verzahnung am inneren und äußeren Rand abgeschrägt ist und somit eine Entformung in einfacher Weise ausführbar ist. Allerdings ist dadurch die Lauffläche für die Verzahnung verringert.

Bei einer vorteilhaften Ausgestaltung beträgt der Öffnungswinkel des Konus der ersten Konusmantelfläche zwischen 20° und 60°, insbesondere zwischen 30° und 50°,

wobei der Öffnungswinkel des Konus der zweiten Konusmantelfläche zwischen 20° und 60° beträgt, insbesondere zwischen 30° und 50° beträgt. Von Vorteil ist dabei, dass beim Entformen eine genügend große Formschräge am inneren und am äußeren Rand vorhanden ist, um ein qualitätsbewahrendes Entformen zu gewährleisten.

Erfindungsgemäß ist die Verzahnung eine Planverzahnung an einer axialen Stirnseite eines radial hervorragenden Bereichs des Verzahnungsteils. Von Vorteil ist dabei, dass die Verzahnung als Verzahnung eines Tellerrades, wie Spiroplanrades oder Hypoidrades, ausführbar ist.

Erfindungsgemäß ist das Verzahnungsteil als Vollwelle ausgebildet.

Bei einer vorteilhaften Ausgestaltung ist zwischen dem von der Verzahnung in axialer Richtung überdeckten Bereich und dem von einer ersten der beiden Lageraufnahmen in axialer Richtung überdeckten Bereich ein Übergangsbereich angeordnet, wobei der in radialer Richtung gemessene Außenradius und/oder Durchmesser mit abnehmendem Abstand zur Verzahnung streng monoton und stetig differenzierbar, insbesondere glatt, ansteigt. Von Vorteil ist dabei, dass die Kerbwirkung reduziert ist, insbesondere in demjenigen Bereich, in welchem Drehmoment von der Verzahnung zum Lageraufnahmebereich hinübertragen wird.

Bei einer vorteilhaften Ausgestaltung grenzt der Übergangsbereich axial an den von der Verzahnung überdeckten axialen Bereich an. Von Vorteil ist dabei, dass die Drehmomentdurchleitung mit verminderter Kerbwirkung ausführbar ist.

Erfindungsgemäß verläuft jeder Zahn der Planverzahnung bogenförmig, insbesondere also bei zunehmendem Radialabstand einen zunehmenden Umfangswinkel aufweist.

Erfindungsgemäß weist das Verzahnungsteil zur Drehachse des Verzahnungsteils eine rotationssymmetrische, axial ausgedehnte kegelstumpfförmige Ausnehmung auf, wobei der von der Ausnehmung überdeckte axiale Bereich den vom radial hervorragenden Bereich in axialer Richtung überdeckten Bereich umfasst oder mit ihm überlappt, insbesondere wobei die Ausnehmung in die Umgebung mündet und innerhalb des Verzahnungsteils durch den von der Verzahnung in axialer Richtung überdeckten Bereich hindurchreicht.

Bei einer vorteilhaften Ausgestaltung nimmt die Zahndicke jedes Zahns der Verzahnung mit zunehmendem Radialabstand zunächst zu und danach ab. Von Vorteil ist dabei, dass bei der Entformung des Verzahnungsteils nach dem Sintern jeder Zahn in Flankenlinienrichtung eine Formschräge aufweist, die ein sicheres Entformen mit hoher Qualität ermöglicht. Außerdem ist der Zahn auch in Profilrichtung, also quer zum bogenförmige Verlauf, entsprechend ausgeführt, um ein solches Entformen zu ermöglichen.

Bei einer vorteilhaften Ausgestaltung ist der vom Übergangsbereich überdeckte Radialabstandsbereich beabstandet vom von der Verzahnung überdeckten Radialabstandsbereich und kleiner ist als der von der Verzahnung überdeckte Radialabstandsbereich. Von Vorteil ist dabei, dass das tragende Material des Verzahnungsteils möglichst gering haltbar ist.

Bei einer vorteilhaften Ausgestaltung geht der Übergangsbereich an seinem von der Verzahnung abgewandten Ende stetig differenzierbar über in einen ersten Bereich des Verzahnungsteils,
wobei der in radialer Richtung gemessene Radius und/oder Durchmesser des Verzahnungsteils im ersten Bereich von einem axialen Ende des Verzahnungsteils mit abnehmendem Abstand zur Verzahnung monoton, insbesondere aber nicht streng monoton, insbesondere gestuft, zunimmt. Von Vorteil ist dabei, dass die Kerbwirkung gering haltbar ist.

Bei einer vorteilhaften Ausgestaltung liegt an einer Stufe des Verzahnungsteils, welche axial beabstandet ist von der Verzahnung und auf der vom Übergangsbereich axial abgewandten Seite der Verzahnung angeordnet ist, eine Passscheibe an, welche axial zwischen der Stufe und einem Innenring eines auf der ersten Lageraufnahme des Verzahnungsteils aufgenommenen Lagers angeordnet ist, insbesondere wobei die Passscheibe den Innenring berührt. Von Vorteil ist dabei, dass mit der einstückig oder mehrstückig ausgeführten Passscheibe das Verzahnungsspiel einstellbar ist, also die axiale Position der Verzahnung zu einem mit der Verzahnung kämmenden Ritzels des Getriebes. Außerdem ist die Einstellung des Verzahnungsspiels und/oder der Lagerspannung am drehenden Teil ausführbar. Somit ist bei Montage die Passscheibe auf das Verzahnungsteil aufzustecken und dadurch das Verzahnungsspiel, Lagerspiel und/oder die Lagerspannung einzustellen. Die damit verbundene Erhöhung des Trägheitsmoments hat zum Vorteil, dass Drehzahlschwankungen verringert werden.

Bei einer vorteilhaften Ausgestaltung ist auf der von der Verzahnung abgewandten Seite der zweiten Lageraufnahme ein Wellendichtringsitz angeordnet.

Wichtige Merkmale bei dem Verfahren zum Herstellen eines vorgenannten Getriebes sind, dass das Verzahnungsteil durch Sintern eines Metallpulvers hergestellt wird.

Von Vorteil ist dabei, dass eine einfache schnelle Herstellung eines äußerst robusten und tragfähigen Verzahnungsteils erreichbar ist, insbesondere im Vergleich zu Kunststoffspritzgussteilen.

Bei einer vorteilhaften Ausgestaltung wird mit dem Verzahnungsteil ein weiteres aus gesintertem Metallpulver hergestelltes Verzahnungsteil in Eingriff gebracht, dessen Verzahnung durch auf das Sintern nachfolgende Lasernachbehandlung geglättet ist. Von Vorteil ist dabei, dass die Abnutzung des gesinterten Verzahnungsteils verringert ist, da es mit dem weiteren, geglätteten Verzahnungsteil im Eingriff ist.

Bei einer vorteilhaften Ausgestaltung ist das Verzahnungsteil nur durch Sintern eines Metallpulvers und nachfolgendes formendes, insbesondere rollierendes, insbesondere mit Rollen ausgeführtes Bearbeiten des Wellendichtringsitzes hergestellt wird.

Die Erfindung wird nun anhand von schematischen Abbildungen näher erläutert:
In der Figur 1 ist ein Längsschnitt durch ein erfindungsgemäßes Verzahnungsteil 1 dargestellt.
In der Figur 2 ist eine Draufsicht auf das Verzahnungsteil 1 in axialer Richtung dargestellt.
In der Figur 3 ist eine Seitenansicht des Verzahnungsteils 1 dargestellt.
In der Figur 4 ist ein Längsschnitt durch ein weiteres erfindungsgemäßes Verzahnungsteil 1 dargestellt, das Aufnahmen für Dorne einer Bearbeitungsmaschine aufweist.
In der Figur 5 ist eine Seitenansicht eines weiteren erfindungsgemäßen Verzahnungsteils 1 dargestellt, wobei eine Fasenfläche 50 am radial äußeren Rand der Verzahnung 2 des Verzahnungsteils erkennbar ist.
In der Figur 6 ist eine zur Figur 5 gehörige Schrägansicht des Verzahnungsteils 1 dargestellt, wobei auch am radial inneren Rand der Verzahnung 2 eine Fasenfläche 60 erkennbar ist.
In der Figur 7 ist ein Bereich der Figur 6 vergrößert dargestellt.

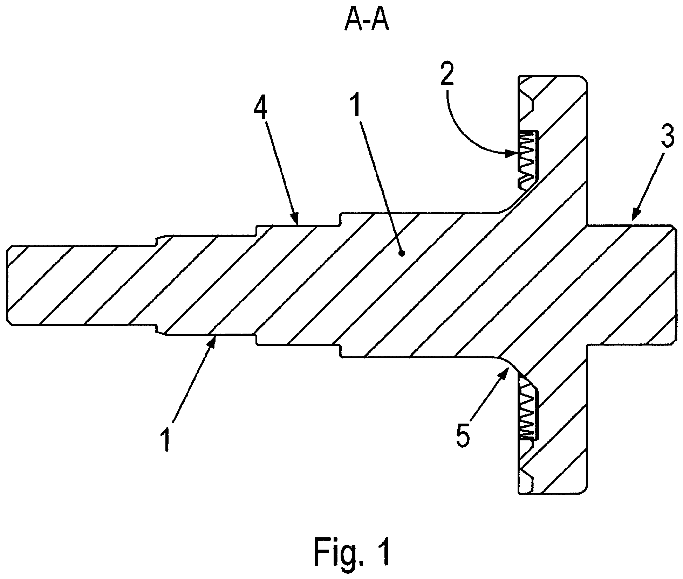

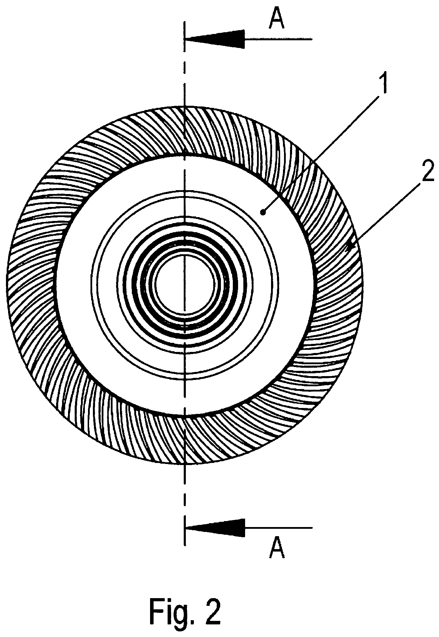

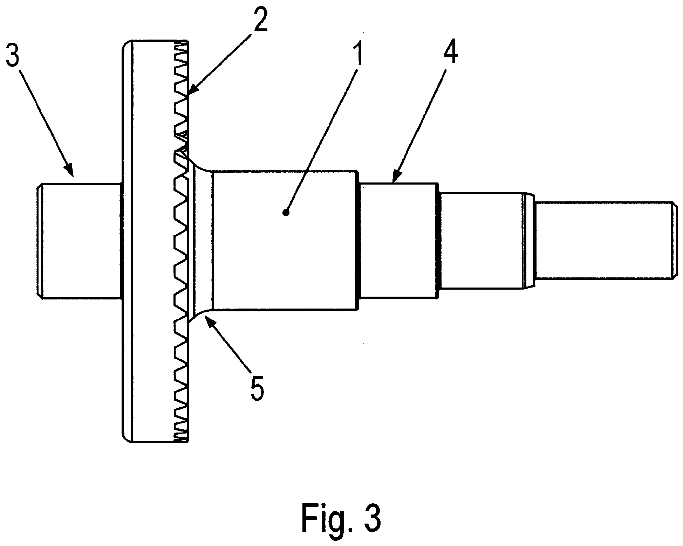

Wie in den Figuren 1 bis 3 dargestellt, weist das Verzahnungsteil eine Planverzahnung 2 auf. Diese Verzahnung ist in einem radial hervorstehenden Bereich des Verzahnungsteils 1 angeordnet.

Das Verzahnungsteil 1 ist mit Ausnahme der Verzahnung 2 als Rotationskörper ausgeführt.

Die axiale Richtung ist die Drehachse des Rotationskörpers.

Axial beidseitig des radial hervorstehenden Bereichs ist jeweils eine Lageraufnahme (3, 4) angeordnet.

Auf jede der Lageraufnahmen (3, 4) ist ein Lager, insbesondere der Innenring eines Lagers, aufsteckbar, wobei der jeweils zugehörige Außenring des jeweiligen Lagers im Gehäuse des Getriebes aufnehmbar ist.

Somit ist das Verzahnungsteil 1 einstückig ausgeführt und gelagert im Gehäuse des Getriebes.

Vom ersten axialen Endbereich des Verzahnungsteils 1 bis zu dem radial hervorstehenden Bereich des Verzahnungsteils 1 wächst der Wellendurchmesser monoton, insbesondere stufenartig monoton, an.

Vom anderen axialen Endbereich des Verzahnungsteils 1 wächst der Wellendurchmesser ebenfalls monoton, insbesondere stufenartig monoton, an.

Der radial hervorstehende Bereich weist auf der Seite der Verzahnung 2 eine Rundung 5 auf. Der Wellendurchmesser wächst bei der Rundung in axialer Richtung stetig differenzierbar streng monoton, insbesondere also glatt, an. An diesen von der Rundung 5 überdeckten axialen Bereich schließt sich dann eine Stufe an, also ein axialer Bereich mit konstantem Wellendurchmesser, insbesondere wobei dieser Wellendurchmesser der maximale Wellendurchmesser der Verzahnungsteils 1 ist.

Dabei ist der Wellendurchmesser der jeweils in radialer Richtung gemessene maximale Durchmesser.

Der von der Rundung 5 überdeckte Radialabstandsbereich ist beabstandet von dem von der Verzahnung 2 überdeckten Radialabstandsbereich, insbesondere ist er kleiner als der von der Verzahnung 2 überdeckten Radialabstandsbereich.

Der von der Verzahnung 2 überdeckte Radialabstandsbereich ist durch den Wellendurchmesser des axialen Bereichs mit konstantem Wellendurchmesser begrenzt.

Der axiale Bereich mit konstantem Wellendurchmesser umfasst den von der Verzahnung überdeckten axialen Bereich.

Das Verzahnungsteil 1 ist aus gesintertem Metallpulver hergestellt. Als Metall ist hierbei bevorzugt Stahl verwendet.

Somit weist das Verzahnungsteil 1 die Form einer zylindrische planverzahnten Lochscheibe auf, durch deren mittig in ihr angeordnete Ausnehmung, insbesondere Loch, eine Welle hindurchragt, welche Wellenstufen aufweist. Zusätzlich ist allerdings die Rundung 5 an der planverzahnten Seite der Lochscheibe hinzugefügt.

Die Verzahnung 2 ist vorzugsweise als Spiroplanverzahnung oder Hypoidverzahnung ausgeführt.

Da der Wellendurchmesser von der Lageraufnahme 3 zum radial hervorstehenden Bereich stufenartig anwächst, ist diese Stufe zum Anlegen einer Passscheibe geeignet.

Zur axialen Positionierung des auf der Lageraufnahme 4 aufgesteckten Lagers wird eine Passscheibe, also Lochscheibe auf das Verzahnungsteil 1 aufgesteckt. Dabei liegt die Passscheibe an der Stufe des radial hervorragenden Bereichs an. Der lichte Innendurchmesser der Passscheibe ist größer als der Wellendurchmesser im von der Lageraufnahme 3 überdeckten Bereich.

Somit ist die Passscheibe zwischen dem radial hervorragenden Bereich und dem Innenring des Lagers angeordnet. Die Passscheibe liegt also am Innenring des Lagers an und ermöglicht die axiale Positionierung vom drehenden Verzahnungsteil 1 aus, obwohl das Trägheitsmoment des drehenden Teils dadurch erhöht wird. Vorteiligerweise ist somit der Außenring des Lagers direkt gegen eine Stufe des Gehäuseteils anstellbar.

Da das Verzahnungsteil 1 durch Sintern in einer Form herstellbar ist, muss die Verzahnung nicht bearbeitet werden.

Ebenso kann auf eine Bearbeitung der Lageraufnahmen 3 und 4 verzichtet werden.

Bei weiteren erfindungsgemäßen Ausführungsbeispielen soll jedoch eine Abdichtung des Getriebeinnnenraums gegen die Umgebung vorgesehen werden. Hierzu ist dann auf der von der Verzahnung abgewandten Seite der Lageraufnahme 4 ein Wellendichtringsitz 6 angeordnet. Somit ist der Innenraum des Getriebes zur Umgebung hin mittels eines dort vorgesehenen Wellendichtrings abdichtbar. Um Dichtheit herzustellen ist eine formende Nachbearbeitung des Wellendichtrings notwendig. Denn nur wenn eine verschwindend geringe Rauigkeit am Wellendichtringsitz 6 bereitgestellt wird, ist eine Abdichtung ermöglicht. Als formende Nachbearbeitung ist vorzugsweise Rollieren, also ein Bearbeiten mit Rollen vorgesehen, wobei zur zentrierten Aufnahme des Verzahnungsteils 1 auf Dorne der Bearbeitungsmaschine am axial vorderen und am axial hinteren Endbereich des Verzahnungsteils 1 jeweils mittig angeordnete axial ins Verzahnungsteil weisende, in den Figuren nicht dargestellte Ausnehmungen, insbesondere Zentrierbohrungen, im Verzahnungsteil 1 vorgesehen sind.

Bei weiteren erfindungsgemäßen Ausführungsbeispielen ist eine kegelstumpfartige und/oder kegelstumpfförmige Ausnehmung mittig ins Verzahnungsteil 1 eingebracht. Somit ist die Rotationssymmetrieachse des Kegelstumpfes die Drehachse des Verzahnungsteils 1.

Der von der Ausnehmung überdeckte axiale Bereich umfasst den vom radial hervorragenden Bereich überdeckten axialen Bereich, insbesondere also den der Lochscheibe.

Die Ausnehmung mündet in die Umgebung und reicht innerhalb des Verzahnungsteils durch den von der Verzahnung 2 überdeckten axialen Bereich hindurch. Somit ist das Trägheitsmoment reduziert, insbesondere mehr als der Erhöhung durch die Passscheibe entspricht.

Die Ausnehmung ermöglicht eine dünnwandige Ausführung des Verzahnungsteils 1, da keine Passfederverbindung zwischen dem verzahnten Bereich und der gestuft ausgeführten Welle notwendig ist.

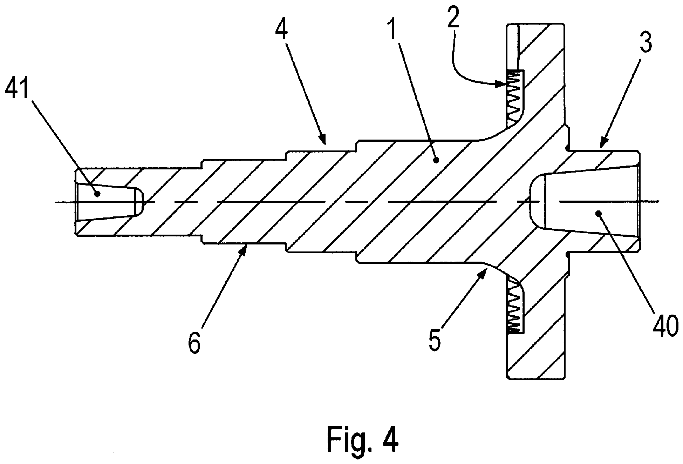

In Figur 4 ist eine hierzu ähnliche beispielshafte Ausführung gezeigt, wobei der von der Ausnehmung überdeckte axiale Bereich nicht den vom radial hervorragenden Bereich überdeckten axialen Bereich, insbesondere also den der Lochscheibe, umfasst, sondern nur mit ihm überlappt.

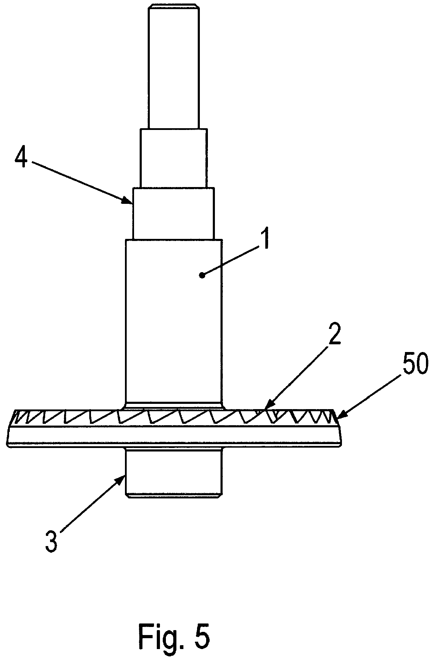

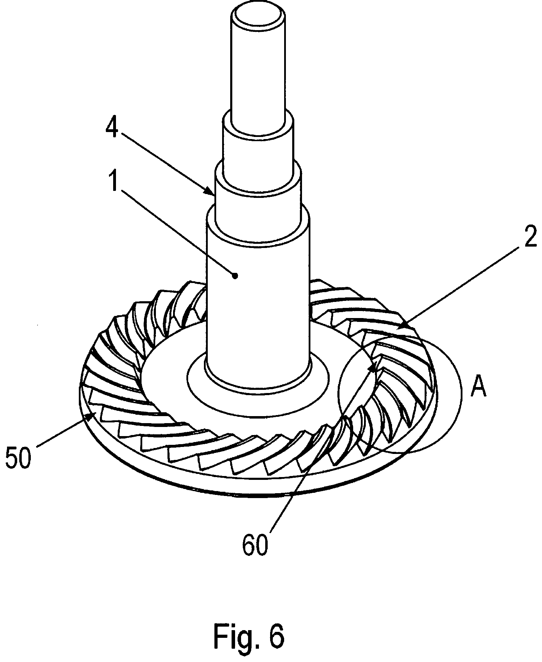

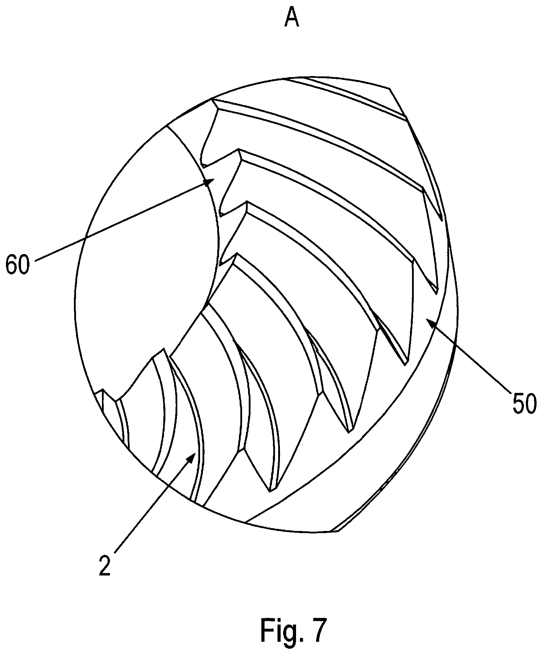

Wie in den Figuren 5 bis 7 dargestellt, weist eine besonders vorteilhaft geformte Verzahnung 2 an ihrem radial inneren Rand eine zweite Fasenfläche 60 und an ihrem radial äußeren Rand eine erste Fasenfläche 50 auf. Beide Fasenfläche sind Teilbereiche einer Mantelfläche eines jeweiligen Konus, dessen Öffnungswinkel zwischen 20° und 60° beträgt. Eine besonders gute Fertigungsqualität ist aber bei einem Öffnungswinkel zwischen 30° und 50° erreichbar.

Die Schnittfläche der beide Konus ist ein Kreis, der näher an den Köpfen der Zähne der Verzahnung 2 angeordnet ist als an den Füssen der Zähne der Verzahnung 2. Der Mittelpunkt des Kreises ist auf der Symmetrieachse des Verzahnungsteiles 1 angeordnet. Das Verzahnungsteil 1 weise eine diskrete N-zählige Drehsymmetrie um die Symmetrieachse herum auf, wobei N die Anzahl der Zähne der Planverzahnung ist.

### Bezugszeichenliste

1 Verzahnungsteil
2 Verzahnung
3 Lageraufnahme
4 Lageraufnahme
5 Rundung
6 Wellendichtringsitz

## Patentansprüche

1. Getriebe mit einem drehbar gelagerten Verzahnungsteil (1),
wobei das Verzahnungsteil (1) zwei Lageraufnahmen (3, 4) und eine Verzahnung (2) aufweist,
wobei das Verzahnungsteil (1) ein Sinterteil ist, also das Verzahnungsteil (1) samt Verzahnung (2) aus gesintertem Metallpulver hergestellt ist,
wobei das Verzahnungsteil (1) einstückig, ausgeführt ist,
wobei die Verzahnung (2) als eine Planverzahnung an einer axialen Stirnseite eines radial hervorragenden Bereichs des Verzahnungsteils ausgebildet ist,
wobei das Verzahnungsteil (1) als Vollwelle ausgebildet ist,
wobei jeder Zahn der Planverzahnung bogenförmig verläuft, also bei zunehmendem Radialabstand einen zunehmenden Umfangswinkel aufweist,
wobei die Zahndicke jedes Zahns der Verzahnung mit zunehmendem Radialabstand zunächst zunimmt und danach abnimmt,
wobei die Verzahnung (2) axial zwischen den beiden Lageraufnahmen (3, 4) angeordnet ist,
wobei das Verzahnungsteil (1) zur Drehachse des Verzahnungsteils (1) eine rotationssymmetrische, axial ausgedehnte kegelstumpfförmige Ausnehmung aufweist,
wobei der von der Ausnehmung überdeckte axiale Bereich den vom radial hervorragenden Bereich in axialer Richtung überdeckten Bereich **umfasst oder mit ihm überlappt,**
insbesondere wobei die Ausnehmung in die Umgebung mündet und innerhalb des Verzahnungsteils (1) durch den von der Verzahnung (2) in axialer Richtung überdeckten Bereich hindurchreicht.

2. Getriebe nach Anspruch 1,
**dadurch gekennzeichnet, dass**
die Verzahnung (2) an ihrem in radialer Richtung äußeren Rand eine erste Fasenfläche (50) aufweist,
insbesondere wobei die erste Fasenfläche (50) an jeder Umfangsposition zur axialen Richtung betragsmäßig einen Winkelbetrag aufweist, welcher zwischen 10° und 30° beträgt, insbesondere zwischen 15° und 25°.

3. **Getriebe nach Anspruch 2,**
**dadurch gekennzeichnet, dass**
die Verzahnung (2) an ihrem in radialer Richtung inneren Rand eine zweite Fasenfläche (60) aufweist,
insbesondere wobei die zweite Fasenfläche (60) an jeder Umfangsposition zur axialen Richtung betragsmäßig einen Winkelbetrag aufweist, welcher zwischen 10° und 30° beträgt, insbesondere zwischen 15° und 25°.

4. **Getriebe nach Anspruch 3,**
**dadurch gekennzeichnet, dass**
eine erste Konusmantelfläche die erste Fasenfläche (50) enthält
wobei eine zweite Konusmantelfläche die zweite Fasenfläche (60) enthält
wobei das Schnittgebilde der ersten Fasenfläche (50) mit der zweiten Fasenfläche (60) auf der einer Planverzahnung zugewandten Seite des Verzahnungsteils (1) angeordnet ist und/oder wobe
das Schnittgebilde der ersten Fasenfläche (50) mit der zweiten Fasenfläche (60) näher am jeweiligen Kopf der Zähne der Verzahnung (2) als am jeweiligen Fuß der Zähne der Verzahnung (2) angeordnet ist,
insbesondere wobei die Konusspitze des Konus der ersten Konusmantelfläche auf der Mittelachse, Drehsymmetrieachse und/oder Drehachse des Verzahnungsteils (1) angeordnet ist
und wobei die Konusspitze des Konus der zweiten Konusmantelfläche auf der Mittelachse, Drehsymmetrieachse und/oder Drehachse des Verzahnungsteils (1) angeordnet ist und wobei
das Schnittgebilde ein Kreis ist, dessen Mittelpunkt auf der Mittelachse, Drehsymmetrieachse und/oder Drehachse des Verzahnungsteils (1) angeordnet ist.

5. Getriebe nach Anspruch 4,
**dadurch gekennzeichnet, dass**
der Öffnungswinkel des Konus der ersten Konusmantelfläche zwischen 20° und 60° beträgt, insbesondere zwischen 30° und 50° beträgt,
wobei der Öffnungswinkel des Konus der zweiten Konusmantelfläche zwischen 20° und 60° beträgt, insbesondere zwischen 30° und 50° beträgt.

6. Getriebe nach einem der vorangegangenen Ansprüche,
**dadurch gekennzeichnet, dass**
zwischen dem von der Verzahnung (2) in axialer Richtung überdeckten Bereich,
und dem von einer ersten der beiden Lageraufnahmen (3, 4) in axialer Richtung überdeckten Bereich, ein Übergangsbereich angeordnet ist, in welchem der in radialer Richtung gemessene Außenradius und/oder Durchmesser
mit abnehmendem Abstand zur Verzahnung (2) streng monoton und stetig differenzierbar, insbesondere glatt, ansteigt.

7. Getriebe nach Anspruch 6,
**dadurch gekennzeichnet, dass**
der Übergangsbereich axial angrenzt an den von der Verzahnung (2) überdeckten axialen Bereich.

8. Getriebe nach Anspruch 6,
**dadurch gekennzeichnet, dass**
der vom Übergangsbereich überdeckte Radialabstandsbereich beabstandet ist vom von der Verzahnung (2) überdeckten Radialabstandsbereich und kleiner ist als der von der Verzahnung (2) überdeckte Radialabstandsbereich.

9. Getriebe nach Anspruch 7 oder 8,
**dadurch gekennzeichnet, dass**
der Übergangsbereich an seinem von der Verzahnung (2) abgewandten Ende stetig differenzierbar übergeht in einen ersten Bereich des Verzahnungsteils (1),
wobei der in radialer Richtung gemessene Radius und/oder Durchmesser des Verzahnungsteils (1) im ersten Bereich von einem axialen Ende des Verzahnungsteils (1) mit abnehmendem Abstand zur Verzahnung (2) monoton, insbesondere aber nicht streng monoton insbesondere gestuft, zunimmt.

10. Getriebe nach Anspruch 7 oder 8,
**dadurch gekennzeichnet, dass**
**auf einer** der **am Verzahnungsteil** (1) **ausgebildeten** Lageraufnahmen (3, 4) **ein Lager aufgesteckt ist,**
**wobei** an einer Stufe des Verzahnungsteils (1), welche axial beabstandet ist von der Verzahnung (2)
und **welche** auf der vom Übergangsbereich axial abgewandten Seite der Verzahnung (2)
angeordnet ist, eine Passscheibe anliegt, welche axial zwischen der Stufe und einem Innenring **des** Lagers angeordnet ist, wobei die Passscheibe den Innenring berührt.

11. Getriebe nach Anspruch 2,
**dadurch gekennzeichnet, dass**
auf der von der Verzahnung (2) axial abgewandten Seite der zweiten Lageraufnahme (4) ein Wellendichtringsitz (6) angeordnet ist.

12. Verfahren zum Herstellen eines Getriebes mit einem Verzahnungsteil (1) nach einem der vorangegangenen Ansprüche,
**dadurch gekennzeichnet, dass**
das Verzahnungsteil (1) durch Sintern eines Metallpulvers insbesondere wobei mit dem Verzahnungsteil (1) ein weiteres aus gesintertem Metallpulver hergestelltes Verzahnungsteil in Eingriff gebracht wird, dessen Verzahnung durch auf das Sintern nachfolgende Lasernachbehandlung geglättet ist.

13. Verfahren nach Anspruch 12 zum Herstellen eines Getriebes mit einem Verzahnungsteil (1) nach Anspruch 11,
**dadurch gekennzeichnet, dass**
das Verzahnungsteil (1) nur durch Sintern eines Metallpulvers und nachfolgendes formendes, insbesondere rollierendes, insbesondere mit Rollen ausgeführtes Bearbeiten des Wellendichtringsitzes (6) hergestellt wird.

## Claims

1. A gear unit having a rotatably mounted toothed part (1),
wherein the toothed part (1) has two bearing receivers (3, 4) and a toothing (2),
wherein the toothed part (1) is a sintered part, therefore the toothed part (1) together with toothing (2) is manufactured from sintered metal powder,
wherein the toothed part (1) is in one-piece,
wherein the toothing (2) is in the form of crown gearing at an axial end face of a radially projecting region of the toothed part,
wherein the toothed part (1) in the form of a solid shaft,
wherein each tooth of the crown gearing is arched, therefore has an increasing circumferential angle as the radial spacing increases,
wherein the tooth thickness of each tooth of the toothing firstly increases with increasing radial distance and then decreases,
wherein the toothing (2) is arranged axially between the two bearing receivers (3, 4),
wherein the toothed part (1) has a rotationally-symmetrical, axially extended, truncated-cone-shaped cutout with respect to the rotational axis of the toothed part (1),
wherein the axial region covered by the cutout comprises the region covered in an axial direction by the radially-projecting region or overlaps therewith,
in particular wherein the cutout issues to the environment and within the toothed part (1) reaches through the region covered in an axial direction by the toothing (2).

2. A gear unit according to claim 1,
**characterised in that**
the toothing (2) has a first bevel surface (50) at its outer edge in a radial direction, in particular wherein the first bevel surface (50) has at each circumferential position an angle amount in relation to the axial direction that is between 10° and 30°, in particular between 15° and 25°.

3. A gear unit according to claim 2,
**characterised in that**
the toothing (2) has a second bevel surface (60) at its inner edge in a radial direction,
in particular wherein the second bevel surface (60) has at each circumferential position an angle amount in relation to the axial direction that is between 10° and 30°, in particular between 15° and 25°.

4. A gear unit according to claim 3,
**characterised in that**
a first cone outer surface contains the first bevel surface (50),
wherein a second cone outer surface contains the second bevel surface (60),
wherein the sectional structure of the first bevel surface (50) with the second bevel surface (60) is arranged at the side of the toothed part (1) facing a crown gearing and/or wherein the sectional structure of the first bevel surface (50) with the second bevel surface (60) is arranged closer to the respective tip of the teeth of the toothing (2) than to the respective base of the teeth of the toothing (2),
in particular wherein the cone apex of the cone of the first cone outer surface is arranged on the central axis, axis of rotational symmetry and/or rotational axis of the toothed part (1),
and wherein the cone apex of the cone of the second cone outer surface is arranged on the central axis, axis of rotational symmetry and/or rotational axis of the toothed part (1)
and wherein the sectional structure is a circle whose central point is arranged on the central axis, axis of rotational symmetry and/or rotational axis of the toothed part (1).

5. A gear unit according to claim 4,
**characterised in that**
the opening angle of the cone of the first cone outer surface is between 20° and 60°, in particular between 30° and 50°,
wherein the opening angle of the cone of the second cone outer surface is between 20° and 60°, in particular between 30° and 50°.

6. A gear unit according to any one of the preceding claims,
**characterised in that**
a transition region is arranged between the region covered in an axial direction by the toothing (2) and the region covered in an axial direction by a first of the two bearing receivers (3, 4), in which transition region the external radius measured in a radial direction and/or diameter increases in a strictly monotonic and continuously differentiable manner, in particular smoothly, as the distance from the toothing (2) decreases.

7. A gear unit according to claim 6,
**characterised in that**
the transition region axially borders the axial region covered by the toothing (2).

8. A gear unit according to claim 6,
**characterised in that**
the radial clearance region covered by the transition region is at a distance from the radial clearance region covered by the toothing (2) and is smaller than the radial clearance region covered by the toothing (2).

9. A gear unit according to claim 7 or 8,
**characterised in that**
the end of the transition region remote from the toothing (2) merges into a first region of the toothed part (1) in a continuously differentiable manner,
wherein in the first region, the radius measured in a radial direction and/or diameter of the toothed part (1) increases monotonically in particular however not strictly monotonically, in particular in a stepped manner, from an axial end of the toothed part (1) as the distance from the toothing (2) decreases.

10. A gear unit according to claim 7 or 8,
**characterised in that**
on one of the bearing receivers (3, 4) formed at the toothed part (1) there is placed a bearing,
wherein a shim ring rests against a step of the toothed part (1), which step is axially at a distance from the toothing (2) and is arranged at that side of the toothing (2) axially remote from the transition region, the shim ring being arranged axially between the step and an inner ring of the bearing, wherein the shim ring contacts the inner ring.

11. A gear unit according to claim 2,
**characterised in that**
a shaft sealing ring seat (6) is arranged at the side of the second bearing receiver (4) remote from the toothing (2).

12. A process for manufacturing a gear unit having a toothed part (1) according to any one of the preceding claims,
**characterised in that**
the toothed part (1) is manufactured by sintering of a metal powder,
in particular wherein a further toothed part manufactured from sintered metal powder is brought into engagement with the toothed part (1), the toothing of which further toothed part is smoothed by laser post-treatment subsequent to the sintering.

13. A process according to claim 12 for manufacturing a gear unit having a toothed part (1) according to claim 11,
**characterised in that**
the toothed part (1) is only manufactured by sintering of a metal powder and subsequent shaping treatment, in particular rolling, in particular carried out by rollers, of the shaft sealing ring seat (6).

## Revendications

1. Transmission comprenant une partie denture (1) montée rotative,
la partie denture (1) présentant deux logements de palier (3, 4) et une denture (2),
la partie denture (1) étant une partie frittée, la partie denture (1) y compris la denture (2) étant fabriquée à partir de poudre métallique frittée,
la partie denture (1) étant d'un seul tenant,
la denture (2) étant réalisée sous la forme d'une denture plane sur une face frontale axiale d'une région radialement en saillie de la partie denture,
la partie denture (1) étant réalisée sous la forme d'un arbre plein,
chaque dent de la denture plane étant en forme d'arc, c'est-à-dire qu'elle présente un angle circonférentiel croissant lorsque la distance radiale augmente,
l'épaisseur de dent de chaque dent de la denture augmentant d'abord à mesure que la distance radiale augmente, puis diminuant ensuite,
la denture (2) étant agencée axialement entre les deux logements de palier (3),
la partie denture (1) présentant un évidement tronconique s'étendant axialement avec une symétrie de rotation par rapport à l'axe de rotation de la partie denture (1),
la région axiale recouverte par l'évidement englobant ou recouvrant la région recouverte dans la direction axiale par la région en saillie radiale, l'évidement débouchant en particulier dans l'environnement et traversant à l'intérieur de la partie denture (1) la région recouverte dans la direction axiale par la denture (2).

2. Transmission selon la revendication 1,
**caractérisée en ce que**
la denture (2) présente une première surface chanfreinée (50) au niveau de son bord extérieur dans la direction radiale,
la première surface chanfreinée (50) présentant en particulier, au niveau de chaque position périphérique, une valeur angulaire par rapport à la direction axiale comprise entre 10° et 30°, en particulier comprise entre 15° et 25°.

3. Transmission selon la revendication 2,
**caractérisée en ce que**
la denture (2) présente une seconde surface chanfreinée (60) au niveau de son bord intérieur dans la direction radiale,
la seconde surface chanfreinée (60) présentant en particulier, au niveau de chaque position périphérique, une valeur angulaire par rapport à la direction axiale comprise entre 10° et 30°, en particulier comprise entre 15° et 25°.

4. Transmission selon la revendication 3,
**caractérisée en ce que**
une première surface d'enveloppe de cône contient la première surface chanfreinée (50)
une seconde surface d'enveloppe de cône contenant la seconde surface chanfreinée (60)
le faciès de coupe de la première surface chanfreinée (50) avec la seconde surface chanfreinée (60) étant agencé sur le côté de la partie denture (1) qui est orienté vers une denture plane et/ou le faciès de coupe de la première surface chanfreinée (50) avec la seconde surface chanfreinée (60) étant agencé plus près de la tête respective des dents de la denture (2) que du pied respectif des dents de la denture (2),
la pointe de cône du cône de la première surface d'enveloppe de cône étant agencée sur l'axe central, l'axe de symétrie de rotation et/ou l'axe de rotation de la partie denture (1) et la pointe de cône du cône de la seconde surface d'enveloppe de cône étant agencée sur l'axe central, l'axe de symétrie de rotation et/ou l'axe de rotation de la partie denture (1) et le faciès de coupe étant un cercle dont le centre est agencé sur l'axe central, l'axe de symétrie de rotation et/ou l'axe de rotation de la partie denture (1).

5. Transmission selon la revendication 4,
**caractérisée en ce que**
l'angle d'ouverture du cône de la première surface d'enveloppe de cône est compris entre 20° et 60°, en particulier compris entre 30° et 50°,
l'angle d'ouverture du cône de la seconde surface d'enveloppe de cône est compris entre 20° et 60°, en particulier compris entre 30° et 50°.

6. Transmission selon l'une quelconque des revendications précédentes,
**caractérisée en ce que**
entre la région recouverte dans la direction axiale par la denture (2) et la région recouverte dans la direction axiale par un premier des deux logements de palier (3, 4) est agencée une région de transition,
au sein de laquelle le rayon extérieur, et/ou le diamètre, mesuré dans la direction radiale augmente(nt) de manière strictement monotone et constamment différentiable, en particulier de manière égale, à mesure que la distance par rapport à la denture (2) diminue.

7. Transmission selon la revendication 6,
**caractérisée en ce que**
la région de transition est axialement adjacente à la région axiale recouverte par la denture (2).

8. Transmission selon la revendication 6,
**caractérisée en ce que**
la région d'espacement radial recouverte par la région de transition est espacée par rapport à la région d'espacement radial recouverte par la denture (2) et est plus petite que la région d'espacement radial recouverte par la denture (2).

9. Transmission selon la revendication 7 ou 8,
**caractérisée en ce que**
la région de transition se transforme au niveau de son extrémité opposée à la denture (2) de manière constamment différenciable en une première région de la partie denture (1),
le rayon et/ou le diamètre, mesuré(s) dans la direction radiale, de la partie denture (1) augmente(nt) de manière monotone, mais en particulier de manière non strictement monotone, en particulier de manière étagée, dans la première région à partir d'une extrémité axiale de la partie denture (1) à mesure que la distance par rapport à la denture (2) diminue.

10. Transmission selon la revendication 7 ou 8,
**caractérisée en ce que**
un palier est monté sur un des logements de palier (3, 4) réalisés au niveau de la partie denture (1),
un disque d'ajustage agencé axialement entre l'étagement et une bague intérieure du palier repose contre un étagement de la partie denture (1) qui est espacé axialement par rapport à la denture (2) et qui est agencé sur le côté de la denture (2) qui est axialement opposé à la région de transition, le disque d'ajustage étant en contact avec la bague intérieure.

11. Transmission selon la revendication 2,
**caractérisée en ce que**
un siège de bague d'étanchéité d'arbre (6) est agencé sur le côté du second logement de palier (4) qui est axialement opposé à la denture (2).

12. Procédé de fabrication d'une transmission comprenant un système selon l'une quelconque des revendications précédentes,
**caractérisé en ce que**
la partie denture (1) est fabriquée par frittage d'une poudre métallique, une autre partie denture, fabriquée à partir de poudre métallique frittée et dont la denture est égalisée grâce à un retraitement au laser succédant au frittage, étant en particulier mise en prise avec la partie denture (1).

13. Procédé selon la revendication 12 permettant de fabriquer une transmission avec une partie denture (1) selon la revendication 11,
**caractérisé en ce que**
la partie denture (1) n'est produite que par frittage d'une poudre métallique et usinage consécutif du siège de bague d'étanchéité d'arbre (6) par formage, en particulier par galetage, en particulier avec des galets.
